# EUROPÄISCHE PATENTANMELDUNG

(11) **EP 1 336 875 A1**
(43) Veröffentlichungstag der Anmeldung: **20.08.2003**
(21) Anmeldenummer: 02028441.0
(22) Anmeldetag: 19.12.2002
(51) Int. Cl.: G02B 6/00

(54) **Lichtleiter**

(30) Priorität: 16.02.2002 DE 10206538
(71) Anmelder: Preh-Werke GmbH & Co. KG, 97616 Bad Neustadt a.d. Saale (DE)
(72) Erfinder: Glienicke, Haiko, 97616 Bad Neustadt (DE)
(74) Vertreter: Dietrich, Barbara

(57) **Zusammenfassung**

Es wird ein Lichtleiter (1) vorgeschlagen, der eine, von einer Lichtaustritts- (1.4) zur Lichteintrittsöffnung (1.1) betrachtet, im wesentlichen S-förmige und bauchige Gestalt aufweist, durch die ein von einer Lichtquelle (4) ausgehendes Licht (a) gebündelt und unter einem bestimmten gewünschten Winkel in Blickrichtung (B_{P}) zu einem Betrachter austritt, und in den Streuzentren (10) eingebracht sind, wodurch eine optimale Ausleuchtung von komplexen Symbol-Geometrien bzw. -strukturen (2) erreicht wird.

## Beschreibung

Die Erfindung betrifft einen Lichtleiter nach dem Oberbegriff des Patentanspruchs 1.

In der DE 92 16 107 U1 wird eine gattungsgemäße Leuchtanzeige für ein Kommunikationsendgerät offenbart. Um ein Licht achsversetzt zu übertragen, ist der lichtleitende Körper, von der Lichtaustritts- zur Lichteintrittsöffnung betrachtet, im wesentlichen S-förmig und bauchig gestaltet, so daß das Licht reflektiert und unter einem bestimmten Winkel gebündelt wird.

Nachteilig ist, dass eine optimale gleichmäßige Ausleuchtung in Verbindung mit einer komplexen auszuleuchtenden Symbolstruktur nicht ausreichend erreicht wird.

Hier greift die Aufgabe der Erfindung ein, diesen Nachteil zu beheben.

Gelöst wird die Aufgabe durch die Merkmale des Anspruchs 1.

Der Erfindung liegt die Idee zugrunde, bei der Herstellung des Lichtleiters in diesen zusätzliche Streuzentren einzubringen. Dies können kugelförmige Polymerpartikel mit vom Material der Lichtleiters verschiedenen Brechungsindizes, beispielsweise Plexiglas, Glaskugeln oder weitere lichtstreuende Pigmente, beispielsweise TiO_{2,} sein.

Diese Einbringung ermöglicht eine gleichmäßige Ausleuchtung insbesondere eines Funktionsbeleuchtungsfensters mit komplexer Symbol-Geometrie mittels eines Lichtleiters für wesentlich von der Lichtaustrittsflächennormale abweichende Blickwinkel einer die Symbolik betrachtenden Person. Eine Teilmenge der Begrenzungsflächen lenkt das Licht in die gewünschte Blickwinkelrichtung um und eine andere Teilmenge der Begrenzungsflächen erreicht, dass das Symbol schattenfrei ausgeleuchtet wird.

Anhand eines Ausführungsbeispiels mit Zeichnung soll die Erfindung näher erläutert werden.

Es zeigt
- Fig. 1: einen Lichtleiter,
- Fig. 1a: eine Schnittdarstellung des Lichtleiters aus Fig. 1.
- Fig. 2: den Lichtleiter in einer Draufsichtdarstellung.

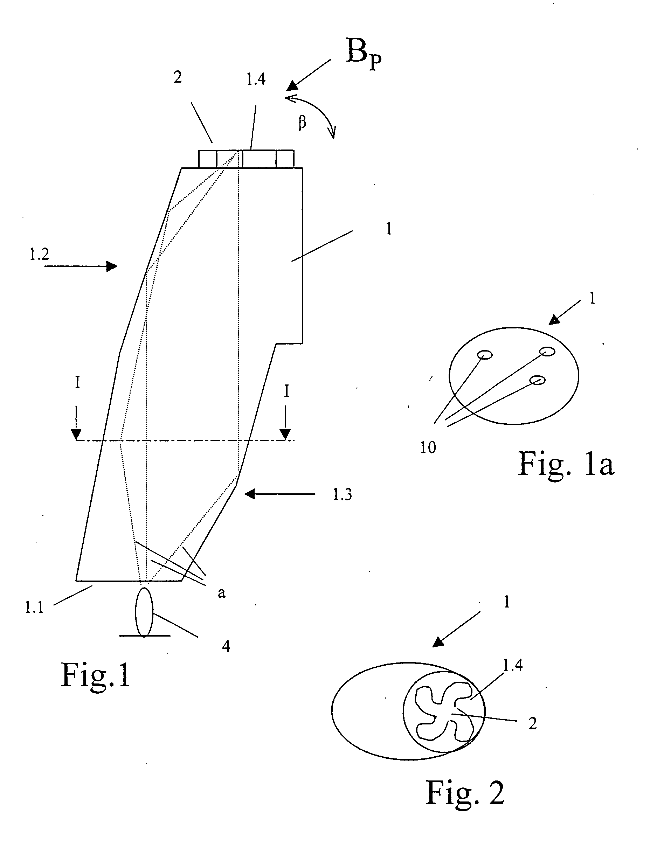

In Fig. 1 ist mit 1 ein Lichtleiter dargestellt, der zur gleichmäßigen Ausleuchtung einer Symbolstruktur 2 dient, welche beispielsweise in einer Fahrzeugblende eingebunden ist. Dazu wird Licht a von einer Lichtquelle 4, hier einer LED, in eine Lichteintrittsöffnung (-fläche) 1.1 eingespeist. Der Lichtleiter 1 weist eine, von der Lichtaustritts- 1.4 zur Lichteintrittsöffnung 1.1 betrachtet, bauchige und im wesentlichen S-förmige Gestalt (Form) auf. Dadurch erhält das Licht a eine Vorzugsrichtung entsprechend der Blickwinkelrichtung B_{P} (Richtung des Pfeils) eines nicht näher dargestellten Betrachters durch Schrägstellung des Lichtleiters 1 (bezogen auf die Lichtquelle 4). Teilbereiche 1.2 der Außenkontur des Lichtleiters 1 konzentrieren die Lichtstrahlen a auf die gewünschte Blickwinkelrichtung. Weitere Teilbereiche 1.3 der Außenkontur dienen zur Beleuchtung einer Lichtaustrittsfläche 1.4 mit kleinen Winkeln gegen die Lichtaustrittsflächennormale. Dies bewirkt eine Reduzierung der Schattenbildung, die durch die auf der Lichtaustrittsseite bzw. -fläche 1.4 erhabene Symbolstruktur 2 bedingt wird.

Zur effektiven Vergleichmäßigung der Lichtstrahlen a unter verschiedenen Blickwinkeln β sind, wie in Fig. 1a im Schnitt I-I aus Fig. 1 näher dargestellt, in den Lichtleiter 1 zusätzliche Streuzentren 10 eingebracht, die eine optimale und gleichmäßige Ausleuchtung der Symbolstruktur 2 ermöglichen, da an diesen ein Teil der Lichtstrahlen a in eine andere Richtung gelenkt und somit an der Außenkontur des Lichtleiters 1 anders reflektiert werden, als die ohne Richtungsänderung.

Diese Streuzentren 10 können dabei folgende Materialien sein
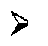 kugelförmige Polymerpartikel mit verschiedenen Brechungsindizes, die zudem verschieden vom Material des Lichtleiters 1 sind, z.B. Plexiglas, Polycarbonat (diffus),
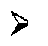 Glaskugeln,
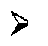 lichtstreuende Pigmente, z.B. TiO₂.

Fig. 2 zeigt die Lichtaustrittsfläche 1.4 des Lichtleiters 1 in einer Draufsicht auf, die hier eine Umluft-Symbolstruktur darstellt.

Die Lichtaustrittsfläche 1.4 ist vorzugsweise mattiert.

## Patentansprüche

1. Lichtleiter, aufweisend eine, von einer Lichtaustritts- zur Lichteintrittsöffnung betrachtet, im wesentlichen S-förmige und bauchige Gestalt, durch die ein von einer Lichtquelle ausgehendes Licht gebündelt und unter einem bestimmten gewünschten Winkel in Blickrichtung zu einem Betrachter austritt, **dadurch gekennzeichnet, dass**
- in den Lichtleiter (1) zusätzliche Streuzentren (10) eingebracht sind.

2. Lichtleiter nach Anspruch 1, **dadurch gekennzeichnet, dass** eine Teilmenge der Begrenzungsflächen (1.2, 1.3) das Licht in die gewünschte Blickwinkelrichtung (B_{P}) umlenkt und eine andere Teilmenge der Begrenzungsflächen (1.2, 1.3) des Lichtleiters (1) das Symbol schattenfrei ausleuchtet.

3. Lichtleiter nach Anspruch 1 oder 2, **dadurch gekennzeichnet, dass** die Lichtaustrittsfläche (1.4) mattiert ist.

4. Lichtleiter nach einem der Ansprüche 1 bis 3, **dadurch gekennzeichnet, dass** die Streuzentren (10) kugelförmige Materialien und mit vom Material des Lichtleiters(1)verschiedenen Brechungsindizes sind.

5. Lichtleiter nach Anspruch 4, **dadurch gekennzeichnet, dass** diese Materialien Polymerpartikel sind.

6. Lichtleiter nach Anspruch 5, **dadurch gekennzeichnet, dass** die Polymerpartikel PLEXIGLAS sind.

7. Lichtleiter nach Anspruch 4, **dadurch gekennzeichnet, dass** das Material ein Polycarbonat ist.

8. Lichtleiter nach Anspruch 2, **dadurch gekennzeichnet, dass** das Material Glas ist.

9. Lichtleiter nach Anspruch 2, **dadurch gekennzeichnet, dass** das Material lichtstreuende Pigmente sind.

10. Lichtleiter nach Anspruch 9, **dadurch gekennzeichnet, dass** das lichtstreuende Pigment ein TiO₂ ist.

11. Lichtleiter nach einem der vorgenannten Ansprüche, **dadurch gekennzeichnet, dass** die Lichtaustrittsseite (1.4) eine komplexe Kontur aufweist.

12. Lichtleiter nach Anspruch 11, **dadurch gekennzeichnet, dass** die komplexe Kontur die Symbolstruktur (2) nachbildet.

13. Lichtleiter nach einem der vorgenannten Ansprüche, **dadurch gekennzeichnet, dass** dieser zur Führung des Lichtes (a) gegenüber der Lichtquelle (4) schräg gestellt ist.
